# EUROPEAN PATENT APPLICATION

(11) **EP 2 735 347 A1**
(43) Date of publication of application: **28.05.2014**
(21) Application number: 13189840.5
(22) Date of filing: 23.10.2013
(51) Int. Cl.: A63F 13/40

(54) **Advanced entertainment actions and achievements logging**

(30) Priority: 27.11.2012 US 201213686751
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

A method for logging actions and/or achievements of a user of a computer-implemented environment. The method comprises: detecting whether said user has taken one of a plurality of predefined actions or has arrived at one of a plurality of predefined achievements in said computer-implemented environment; when said predefined action or predefined achievement was detected, modifying a subscore of the user in at least one of a plurality of categories based on the detected predefined action or predefined achievement, and updating a global score of said user based on the subscores of said user in each of said plurality of categories.

## Description

### TECHNICAL FIELD

The present disclosure relates to logging actions and/or achievements of a user of a computer-implemented environment.

### BACKGROUND

Common video games often have an achievement-based point system, by which an individual player's score is increased when the player accomplishes certain tasks within the video game. The achievements are usually reflected in the score, but the player does not know the composition of his or her score. Moreover, in these achievement-based point systems it is not possible to allocate a score for anything other than involvement in the computer game, i.e., the score is only related to that video game. Furthermore, there is no social, group, team, or community achievement aspect to these achievement-based points systems.

### SUMMARY

In a first aspect of the present disclosure, one or more computer-readable media (e.g., storage media) are provided having computer-executable instructions embodied thereon that are adapted to cause a computer to perform a method for logging actions and/or achievements of a user of a computer-implemented environment. The method comprises: detecting whether the user has taken one of a plurality of predefined actions or has arrived at one of a plurality of predefined achievements, and, if the predefined action or predefined achievement is detected, modifying a subscore of the user in at least one of a plurality of categories based on the detected predefined action or predefined achievement, and updating a global score of the user based on the modified subscores of the user in each of that plurality of categories.

The categories may be, e.g., represented by containers to hold the user's subscores. In some embodiments, the modifying comprises modifying subscores of the user in at least two of the plurality of categories based on the detected predefined action or predefined achievement. The present disclosure describes computer-readable media, systems, and computer-implemented methods for logging both the actions of the user and the user's achievements, e.g., within a social network. The actions and achievements can refer to an individual or a social, group, team, or multi-device activity. In this context, an action can refer to an activity, such as watching a video alone or with friends, contributing to a blog, or buying a music track online. An achievement may, e.g., refer to an activity that would require a user to complete a task or a plurality of tasks. In both cases, points are awarded for undertaking an action or for arriving at an achievement. Points awarded to a user contribute to the user's subscores in predefined categories. After having undertaken an action or having arrived at an achievement, the user's global score is updated based on the modified subscores of the user in the different categories. Hence, points awarded to the user contribute to the user's global score, thereby fostering a positive, but competitive, user environment.

In an embodiment, the computer-implemented environment comprises an online environment, in particular, a social network environment and/or a gaming environment. In some embodiments, the computer-implemented environment comprises a plurality of sections, for example, one or more gaming sections, blogging sections, media sections, etc. The user is allowed to take actions and/or to arrive at achievements in each of the sections. Hence, by playing an online game in one of the game sections, or by listening to a music track in one of the media sections, the user will be awarded points that will add to his subscores, contributing to the user's global score. Using the method of the present disclosure in the context of online environments (e.g., online games) is, in particular, beneficial as these environments usually are more long-lived than traditional retail software (e.g., retail games). This way, the method may allow for defining the user's profile in the different categories over many years in which the user uses the online environment. The user's subscores thus much more precisely portray the user's behavior and preferences during that time.

According to an embodiment, at least one of the predefined actions or predefined achievements refers to a user activity outside the computer-implemented environment. This allows the user to improve his subscores and thereby also his global score by activities outside the computer-implemented environment. For example, the user may be awarded points for contributing to a blog which is not part of the specific computer-implemented environment or by completing a deal with a company online or offline. This way, the user's profile, which is expressed in the user's subscores in the different categories, will generally be more precise.

In some embodiments, at least one and, in some instances, all of the predefined actions or predefined achievements refer to user activities within the computer-implemented environment.

In an embodiment, at least one of the predefined achievements is detected in reaction to the user having completed a predefined task or each of a plurality of predefined tasks. In particular, at least one of the predefined achievements may be detected in reaction to the user having completed a predefined task or a plurality of tasks within the computer-implemented environment. For example, in embodiments in which the computer-implemented environment comprises an online game, the user may be awarded points contributing to one or more subscores in different categories when completing a task within the game.

According to an embodiment, at least some of the predefined achievements or actions are arranged in hierarchical levels, such that a first one of the predefined achievements or actions being associated with a first hierarchical level is only available to the user when the user and/or one or more other users of the computer-implemented environment has completed each predefined achievement or action being associated with a level lower than the first level, respectively. This embodiment allows for multi-tier achievements, in which a more advanced achievement or action is made available to the user only when the user has previously completed each of a predefined set of less advanced achievements. In some instances, the first predefined achievement or action is made available to the user when the user has previously completed each predefined achievement or action being associated with a level lower than the first level together with one or more other users, like, e.g., friends of the user. As one specific example, the user must first accomplish one or more achievements of a third level to become a "Mega Explorer" before he is provided access to one or more additional achievements of a second level, not previously available to the user, by completion of which he is awarded the title "Giga Explorer." Only after having been awarded that title, one or more additional achievements of a first level, not previously accessible by the user, are made available to the user. Upon completion of these additional achievements, the user will be awarded the title "Most Amazing Explorer." As another example, progressing from one hierarchical level to the next may involve, as a required achievement, collecting a predefined number of points, which can be accumulated through performing any of a plurality of relevant actions.

In some instances, the first predefined achievement or action may even be available to the user when the one or more other users, e.g., his friends, have completed the lower-level achievements or actions without him. However, this may require that the user and/or the one or more other users have agreed to cooperate, e.g., by indicating that they are friends within the computer-implemented environment. In some instances, an achievement or action completed by the one or more other users is only considered completed for the user when the user and/or the one or more other users have recognized each other as friends in the computer-implemented environment before the achievement or action is completed.

In an another embodiment, the first one of the predefined achievements or actions being associated with a first hierarchical level is available to the user via a first access device of the user, and wherein at least one of the predefined achievements or actions being associated with a level lower than the first hierarchical level is available to the user via a second access device of the user. This embodiment allows for support of multi-device activities like, e.g., multi-device gaming. As one example, an achievement may be detected when the user watches a show episode and its associated game content or game using a first user access device. Only upon detection of that achievement, the system provides access to a game or some specific game content to the user via a second user access device.

In an embodiment, at least two of the predefined actions or predefined achievements are available to the user via different user access devices. This embodiment allows actions and achievements to be tracked that are completed using different access devices. For example, the user may gain points in the different categories by watching movies on television, playing games on his computer and calling people on his mobile phone. While using different user access devices, these activities will contribute to the user's points in the different categories. As a result, the user's subscores in the different categories will more accurately portray the user's behavior and preferences.

According to an embodiment, the plurality of predefined actions or the plurality of predefined achievements comprises at least one of a gaming activity, a media consumption activity or a social activity. In these embodiments, the user's subscores more precisely reflect the user's profile throughout activities in different fields or sections. A media consumption activity may, for example, refer to watching a video or listening to music, while a social activity may, for example, refer to sending an e-mail, blogging, chatting with other users, etc. The media consumption activity may refer to any kind of digital or non-digital media, for example, video, audio, music, games, books, e-books, and others, but is not limited to these forms of media. It is to be understood that while an activity may, for example, be labelled as a social activity, the user may in some instances not only be awarded points in a social category when completing a social activity, but, for example, also in a media consumption category, e.g., when watching a video together with friends.

In an embodiment, the modifying comprises modifying the subscore using a look-up table associating each of the predefined actions and each of the predefined achievements with at least one of the plurality of categories. The look-up table may thus be used to determine those categories in which the user will be awarded points when having taken one of the predefined actions or having arrived at one of the predefined achievements.

In some embodiments, the user's subscores in each of the categories associated with the predefined action or the predefined achievement will be modified in the same way.

However, it is preferred that the look-up table further associates each of the predefined actions and each of the predefined achievements with a number of points, by which the subscore in the at least one of the plurality of categories is to be modified when the predefined action or predefined achievement is detected, respectively. This allows the computer system to modify the subscores in different categories in different ways, when one of the predefined actions or achievements was detected. For example, in embodiments in which one category refers to "audio" and another category refers to "video," when watching a music video, the user's subscore in the category "audio" may be increased by two, while the user's subscore in the category "video" is increased by one.

In some embodiments, modifying the subscore may comprise increasing or decreasing the subscore. In embodiments using a look-up table further associating each of the predefined actions and each of the predefined achievements with a number of points, modifying the subscore may, in particular, comprise increasing or decreasing the subscore in the at least one category by the number of points. The number of points included in the look-up table may in some embodiments be a positive or a negative number. In some embodiments, the number of points may be an integer number, a rational number, and/or a real number.

In an embodiment, the method further comprises: when the global score of the user or one or more of the subscores of the user exceeds a predetermined threshold score, performing at least one of:
- enabling the user and/or one or more other users of the computer-implemented environment to take an additional action or to access an additional task not previously available to the user and the one or more other users before, respectively; and
- providing at least one of a gift, a deal, and a promotion to the user and/or to one or more other users of the computer-implemented environment.

The gift may, for example, be given within the computer-implemented environment or outside the computer-implemented environment. In some embodiments, the gift may comprise a free item given to the user in an online game. Alternatively or additionally, the gift may comprise an amount of money provided to the user in the online or the offline world. In some instances, the user may choose a recipient for the gift, such that the gift provided to the user is forwarded to another person or user at the user's choice. The gift could be of permanent duration or only of limited lifetime. In some embodiments, the user may be given access to an additional section of the computer-implemented environment or to new media content. For example, when the user has arrived at a predefined global score or at predefined subscores in predefined categories, additional sections of the computer-implemented environment will be accessible for the user. As an example, having gained a predefined level of dexterity skill in action games, the user may be granted access to an additional action game. The deal may, e.g., comprise a discount on some product(s) or service(s), in the online and/or offline world. The promotion may, e.g., comprise that the user is awarded a specific title, function, or privilege in the online or offline world. As one example, the user may be awarded administrator status for a blog when his subscore in a corresponding category exceeds a predetermined threshold.

The one or more other users may be friends of the user in the computer-implemented environment. In some instances, the one or more other users may refer to other users that are directly linked to the user, that are within a same group, or that have mutually agreed to cooperate.

Besides individual rewards, the method thus also provides for multi-user rewards. For example, a user may be provided with a gift, a deal, and/or promotion when one or more of the user's friends in the computer-implemented environment have gained subscores in one or more categories that exceed predetermined thresholds. Generally, completion of individual user achievements or actions may trigger individual or multi-user rewards. Similarly, completion of multi-user achievements or actions may trigger individual or multi-user rewards. According to an embodiment, modifying the subscore of the user in at least one of the plurality of categories comprises: modifying a partial subscore of the user in at least one of a plurality of subcategories of the at least one category, and determining the subscore in the at least one category based on the partial subscores of the user in the plurality of subcategories of the at least one category. In this embodiment, one or more of the categories are sub-divided into subcategories. This allows the computer system to log the user's actions and achievements in an even more precise manner. For example, if one of the categories refers to music consumption, subcategories of that category may refer to listening to a music title alone, listening to a music title together with a friend, and listening to a music title in a group of users. In some embodiments, two or more of the plurality of categories may each comprise one or more identical subcategories. In some embodiments, the subscore in the at least one category is determined by adding the partial subscores of the user in each of the plurality of subcategories of the at least one category. In some instances, the subscore of the user in the at least one category is determined as a weighted sum of the user's partial subscores in each of the plurality of subcategories of the at least one category.

In another embodiment, the plurality of subcategories comprises at least one of an individual, a social, a team, and a community-based subcategory. In some embodiments, at least two of the plurality of categories each comprise at least one of an individual, a social, a team, and a community-based subcategory.

According to an embodiment, the method further comprises: providing to the user a visual representation of the global score of the user and the subscore of the user in at least some of the plurality of categories. In some embodiments, the subscores of the user in all of the plurality of categories are included in the visual representation. The visual representation may, for example, comprise a bar chart of the global score and/or of one or more of the subscores. In some embodiments, the visual representation comprises a pie chart of the user's subscores. This allows the user to easily see how his subscores in the different categories contribute to his global score.

According to an embodiment, updating the global score of the user comprises adding the subscores of the user in each of that plurality of categories. In some embodiments, the global score of the user is determined as a weighted sum of the user's subscores in each of the plurality of categories. This way, one or more of the categories may be given a higher priority than other categories.

According to an embodiment, the plurality of categories comprises at least one of a video category, an audio category, a music category, a chat category, a gaming category, and a social category.

In an embodiment, at least one of the predefined actions comprises at least one or a combination of two or more of: completing an online purchase, entering a code, subscribing to a newsletter, entering a review, or expressing appreciation of online content by clicking on a button, adding a connection from or to the user in a social network, watching a specific video, movie, or show episode, watching all of a predefined list of videos, watching a video together with at least a predefined number of additional users of the computer-implemented environment, listening to a specific music title, and contributing to a blog. In some instances, the user may have received a code, e.g., by e mail, when buying a product in a shop, by an advertisement in a magazine or a newspaper, on a coupon, or in any other way. The user may then enter the code, whereupon he is awarded points in one or more of the categories.

According to an embodiment, at least one of the predefined achievements comprises at least one or a combination of two or more of: completing an individual challenge, completing a group challenge, completing a community challenge, completing one or more predefined tasks within a predefined time limit, having played one or more online games for a predefined amount of time, having consumed a predefined amount and/or a predefined set of media contents, and having been registered for an online resource, in particular, an online game or an online social network, for at least a predefined period of time.

Community challenges may, for example, be provided as sponsored challenges that offer rewards for predefined achievements, which users can strive to reach. For example, the first thousand users (or players) to achieve something will earn points in one or more categories. Similarly, when the user subscribes to a newsletter or interacts in any other way with an online offer, the user will receive points in one or more of the categories.

In a further aspect, the present disclosure provides one or more computer-readable media having computer-executable instructions embodied thereon that perform a method comprising: receiving, from a provider of a computer-implemented environment, an indication of at least one of a plurality of categories to be associated with a predefined action or a predefined achievement of a user, and storing the indication of the at least one category and the predefined user action or predefined user achievement in a look-up table.

The provider of the computer-implemented environment may thus define one or more categories. In some embodiments, receiving an indication comprises receiving a selection of at least one of a plurality of predefined categories.

In some instances, columns of the look-up table refer to the different categories in which the user may gain subscores and rows of the look-up table refer to the predefined actions and predefined achievements.

The term provider may refer to a provider of the computer-implemented environment or platform as a whole or to a provider of one of a plurality of sections of the computer implemented environment. For example, a computer-implemented environment may comprise a gaming section and a blog section. In that case, the provider of the blog section may define actions and achievements to be taken or reached by the user within the blog section of the computer-implemented environment. The user may further define or select (via user input) the categories, in which the user's subscore will be modified when the predefined action or predefined achievement is detected. In some instances, the provider of the blog section may define a number of points by which the user's subscores in the categories will be modified upon detection of the predefined action or predefined achievement. Similarly, the provider of the gaming section may define the actions and achievements for which the user will be awarded points within the gaming section.

In some instances, only the provider of the overall computer-implemented environment or platform is entitled to define categories, while the providers of the sections are enabled to define actions and achievements within their respective section. However, the providers of the sections may in some instances not be enabled to add any new categories for the users to gain points. Yet, it is preferred that the providers of the sections within the computer-implemented environment are enabled to define new categories in which the user may be awarded points. In some instances, the provider of the overall computer-implemented environment or platform defines a generic set of actions and achievements, from which the providers of the sections of the computer-implemented environment may choose, such that the users will be awarded points when completing one or more of the chosen actions or achievements within the corresponding section.

According to an embodiment, receiving further comprises receiving, from the provider, an indication of a number of points in the at least one category and storing the number of points in the look-up table.

In a further aspect, the present disclosure provides a computer system, comprising: A server adapted to be coupled to at least one device of the user, a database comprising a look-up table associating each of a plurality of predefined actions and predefined achievements with at least one of a plurality of categories, a counter adapted to count a subscore of the user in each of the plurality of categories, evaluation logic adapted to detect whether the user has taken one of the plurality of predefined actions or has arrived at one of the plurality of predefined achievements via the at least one device, and, when the action or achievement was detected, modify the subscore of the user in at least one of the plurality of categories based on the detected action or achievement of the user using the look-up table.

According to an embodiment, the system further comprises a counter for a global score of the user, and the evaluation logic is further adapted to update the global score of the user based on the modified subscores of the user in each of the plurality of categories.

In an embodiment, the look-up table further comprises a number of points by which the subscore in the at least one category is to be modified when the predefined action or predefined achievement is detected.

Further embodiments and benefits become evident from the following description in connection with the accompanying drawings.

### DESCRIPTION OF THE DRAWINGS

The foregoing aspects and many of the attendant advantages will become more readily appreciated as the same become better understood by reference to the following detailed description, when taken in conjunction with the accompanying drawings, wherein:
FIGURE 1 is a flow chart that illustrates an exemplary method for logging actions and/or achievements of the user;
FIGURE 2 is a bar chart representing a user's global score;
FIGURE 3 is a diagram indicating different categories;
FIGURE 4 is a pie chart illustrating the composition of a user's global score;
FIGURE 5 is a visual representation of the user's global score and subscores that may be part of a screen shot;
FIGURE 6 is a network diagram that illustrates an exemplary computer system; and
FIGURE 7 is an exemplary class diagram for logging actions and/or achievements of a user.

### DETAILED DESCRIPTION

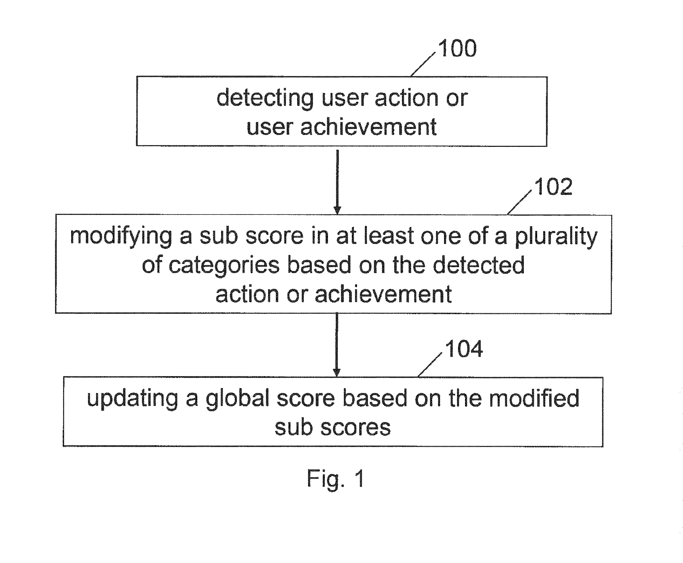

FIGURE 1 shows a flow chart that illustrates an exemplary method. In step 100, it is detected whether a user has taken one of a plurality of predefined user actions or has arrived at one of a plurality of predefined user achievements. If one of the predefined actions or predefined achievements was detected, the method continues in step 102 by modifying a subscore in at least one of a plurality of categories based on the detected action or achievement. Subsequently, in step 104, the method provides for updating a global score of the user based on the user's subscores in each of the categories.

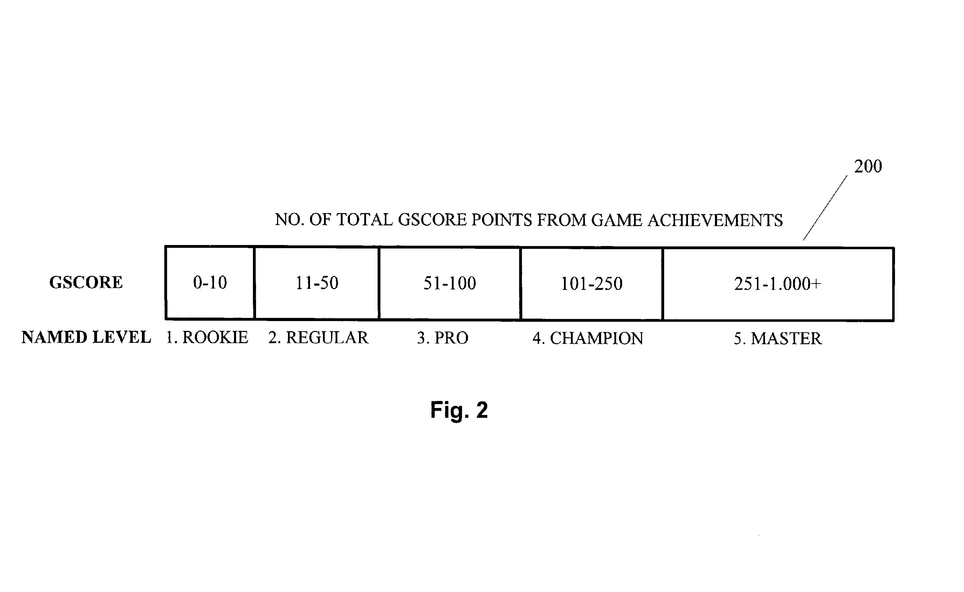

FIGURE 2 shows a bar chart 200 that illustrates the global score of a user. The bar chart can be presented, for example, in a user interface on a display of a computing device. FIGURE 2 shows the user's global score in combination with predefined hierarchical levels of a global score to facilitate reading the score. With a global score of between 0 and 10, a user would be ranked a "Rookie" (Level 1), with a global score of between 11 and 50 a "Regular" (Level 2) with a global score of between 51 and 100 a "Pro" (Level 3), with a global score of between 101 and 250 a "Champion" (Level 4), and with a global score of at least 251 a "Master" (Level 5). The bar chart of FIGURE 2 is associated with a user that has a global score of 221 points, and thus is a "Level 4 Champion." The user (or anyone else viewing the bar chart) can see from the bar chart how far it is to the next level, which would be a "Level 5 Master" and how many points are needed to reach this level.

In FIGURE 2, the highest indicated score for the "Master" level is set to 1000 points for the global score. Although users can exceed this value, most users may not reach it. However, from 1000 points global score on, the "Master" level will be counted in an endless fashion: For every 1000 points more the "Master" level is set to "Master +1," thus a user scoring 3000 points reaches the level "Master +2." Still, the score of 1000 points in FIGURE 2 may easily be adapted to a different value, based on the desire of the game provider or the platform provider.

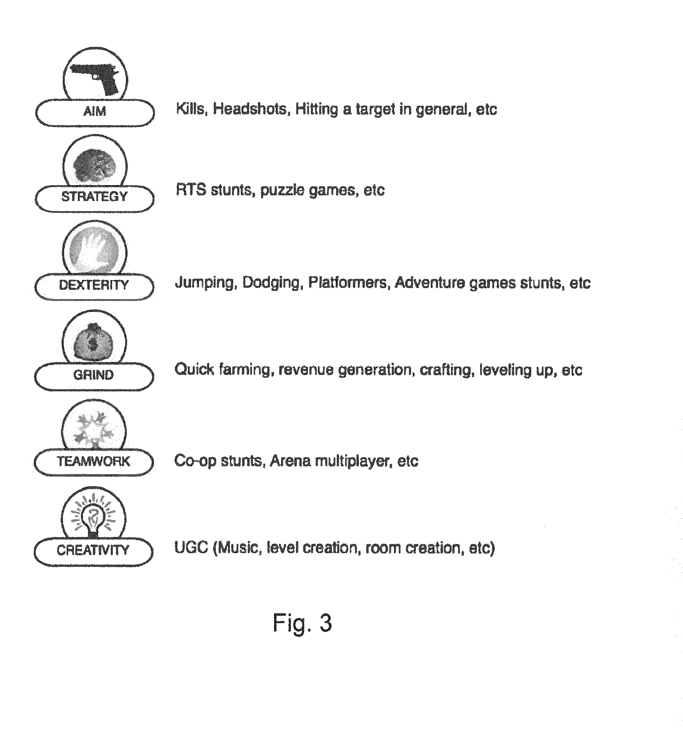

FIGURE 3 shows an illustration of six different categories, in which the user may gain corresponding subscores. The categories and corresponding information can be presented, for example, in a user interface on a display of a computing device. As shown in FIGURE 3, categories can have corresponding information such as graphical icons (e.g., an icon including an image of a hand to represent "Dexterity") and text descriptions (e.g., examples of activities that may increase a corresponding subscore). The categories shown in FIGURE 3 refer to skills and are defined in a game centric way. In this example, a system is installed for counting game-centric subscores in six categories (which may be represented by containers that hold the respective subscores) that cover six different types of activities in games; example activities are listed for each category. For example, "Jumping" and "Dodging" are listed as example activities in the "Dexterity" category. Most games will be associated with two or more of these activities. Hence, by playing a game and taking actions or arriving at achievements within that game, the user may increase his subscore in two or more of these categories.

A first category shown in FIGURE 3 ("Aim") refers to activities involving an aiming skill. The user's subscore in this category will be increased, e.g., when the user kills an opponent in a game, performs precise shooting (e.g., headshots), hits a target in general, etc. A second category shown in FIGURE 3 ("Strategy") refers to activities involving strategy. The user's subscore in this category will be increased, e.g., when the user successfully performs a real-time strategy (RTS) stunt in a game, solves a puzzle game, etc. A third category shown in FIGURE 3 ("Dexterity") refers to activities involving dexterity. The user's subscore in this category will be increased, e.g., when the user successfully performs in-game skills such as jumping, dodging, platforming (moving from platform to platform, e.g., by jumping), a stunt in an adventure game, etc. A fourth category shown in FIGURE 3 ("Grind") refers to activities involving repetition or progress over time. The user's subscore in this category will be increased, e.g., when the user succeeds in in-game skills such as quick farming, revenue generating, crafting, levelling up, etc. A fifth category shown in FIGURE 3 ("Teamwork") refers to activities involving teamwork. The user's subscore in this category may be increased, e.g., when the user successfully performs an in-game stunt in cooperation with one or more other users, succeeds in an arena game together with other users, etc. A sixth category shown in FIGURE 3 ("Teamwork") refers to activities involving creativity. The user's subscore in this category may be increased, e.g., when the user uploads or creates music, art work, etc. For example, the user's subscore in the category "Creativity" may be increased when he creates a new room or level in a simulation game.

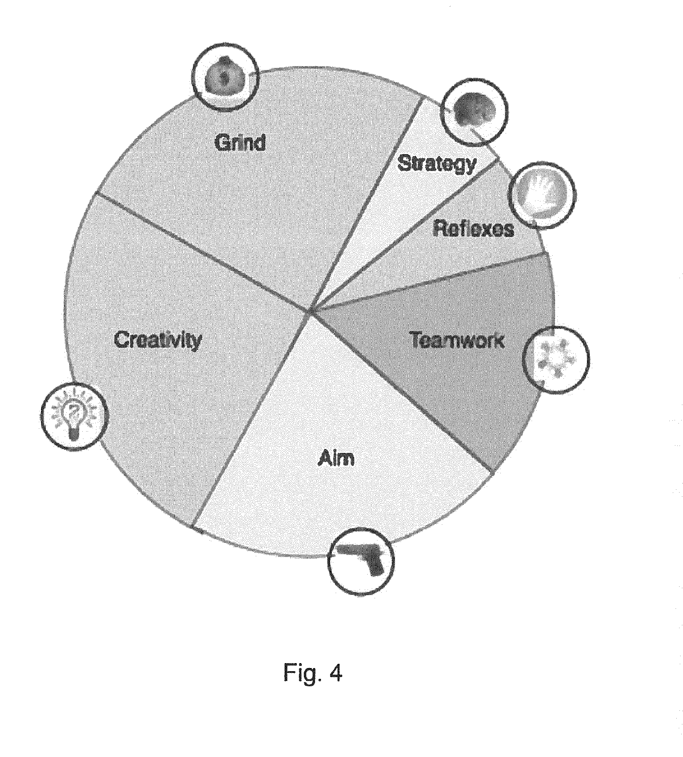

While FIGURE 3 gives an example of possible categories and corresponding activities, in other examples, one or more of the categories may be labelled differently and/or have different corresponding activities. In some instances, more or less than six categories may be present. In one example, each of the categories refers to one of the 16 personality dimensions described in Cattell, R.B. "The description and measurement of personality," New York, N.Y., Harcourt, Brace and World (1946). In particular, there may be 16 categories, which refer to abstractedness, apprehension, dominance, emotional stability, lifelines, openness to change, perfectionism, privateness, reasoning, rule consciousness, self-reliance, sensitivity, social boldness, tension, vigilance, and warmth. The provider may attribute points to the user in any of these categories when a predefined user action or user achievement was detected. FIGURE 4 shows a pie chart that illustrates the contributions of the user's subscores in the six categories of FIGURE 3 to the user's global score. The pie chart can be presented, for example, in a user interface on a display of a computing device. As can be seen from FIGURE 4, the main contributions to the user's global score are from subscores in the categories "Aim," "Grind," and "Creativity." FIGURE 4 also illustrates an example variation in category labels, e.g., "Reflexes" as compared with "Dexterity" in FIGURE 3.

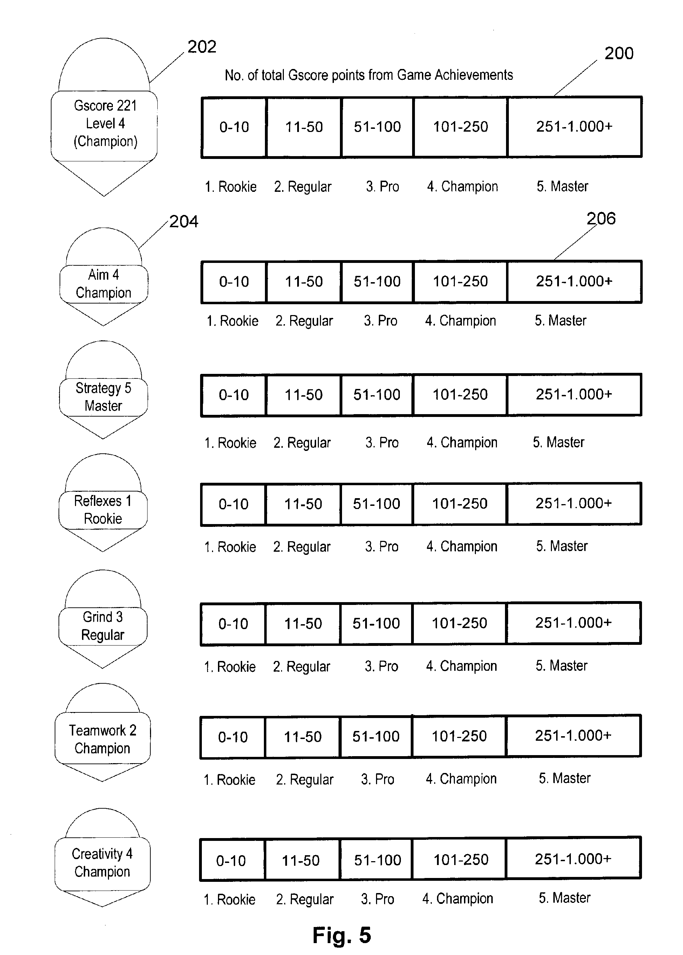

FIGURE 5 illustrates a visual representation of the user's global score and subscores. The visual representation of FIGURE 5 may, for example, be presented in a user interface provided to the user on a display. In a first section of the visual representation of FIGURE 5, the user's global score is illustrated as a bar chart 200 as also shown in FIGURE 2. In section 202 displayed in the upper left part of the visual representation of FIGURE 5, a picture or symbolic icon of the user is displayed along with the user's global score and his current level. In a third section 204, symbols illustrating the different categories are displayed along with the user's ranking in each of these categories. In a fourth section 206, the user's subscore in each of the categories is shown as a bar chart. Similar to the bar chart 200, the bar charts of the user's subscores in section 206 also show the levels associated with each of the categories. As an example, the user is ranked as a "Champion" (Level 4) in the category "Aim," while he is ranked as a "Master" (Level 5) in the category "Strategy." In this example, the global score illustrated in the bar chart 200 is determined as a weighted average of the subscores in the different categories illustrated in section 206.

As the name of the categories suggest, each skill stands for a different kind of game play, while each achievement might be connected to two or more of the skills (which may be represented by containers) to actually achieve it. For example, to solve a dexterity based puzzle, the user receives 20 global score points, that is, 10 "strategy" points and 10 "dexterity" points. For winning a match with their friends in a first-person-shooter online game they might receive 30 global score points, which break down to 20 "aim" points and 10 "teamwork" points.

If the user displays their global score as a sum (rather than a weighted average) of, for example, 2345 points they can see that this sum is split into six different values of subscores in respective categories, thus showing them what kind of game play path they took to reach this score. For example, about half their points of 2345 are made up of "aim" skill at 1233 points, 453 points are "strategy" skill points, 15 "dexterity" skill points, 199 "grind" skill points, 356 "teamwork" skill points and 89 "creativity" skill points.

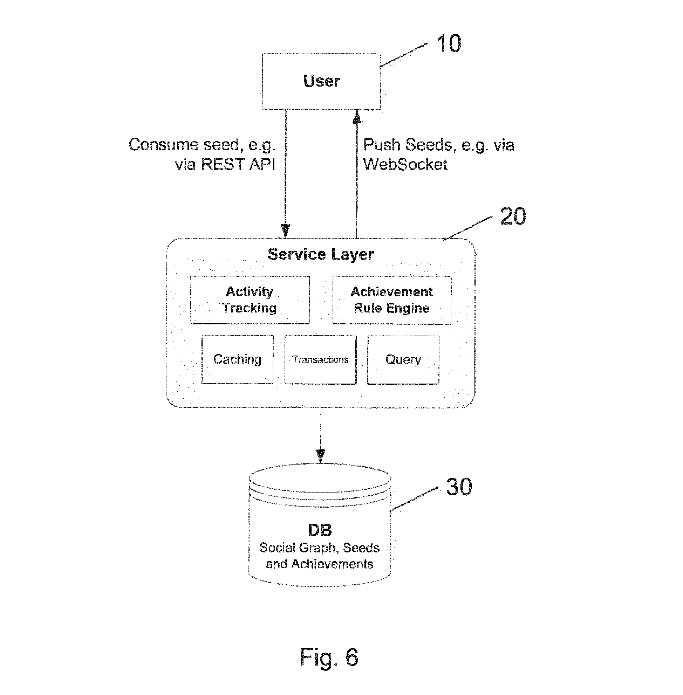

FIGURE 6 shows a network diagram of a system. Activities undertaken by the user device 10 are logged by the service using a service layer 20. For example, the user device 10 may consume (e.g., via a REST API) a seed, e.g., a seed for an online game.

A seed can have seed content and a few basic parameters, and might have additional parameters. A seed can be used to represent live, real-time content; seeds are persistent over time and can grow or shrink in size. For example, if a user starts a game, a seed related to the game (referred to as a game session seed) may be created. Other users can join the game session and leave it again, thereby increasing or decreasing the size of the respective game session seed. Furthermore, persistent items of the game session may also increase the size of the game session seed, such as achievements gained by the users participating in the game session, or statistics that may be persistently stored. Even though the game session may be terminated after the last user left the game session, the respective game session seed may still be stored. Therefore, the game session seed can be referenced by other seeds in order to retrieve the information stored in the game session seed, such as achievements and statistics. For more information on seeds, see U.S. Patent Application No. 13/609,046, filed on September 10, 2012, entitled "Management of Online Content in a Network," the disclosure of which is incorporated herein by reference.

The service layer 20 (which may be implemented on a server in communication with the user device 10) tracks or logs the activity and, using an achievement rule engine, which may, for example, comprise a look-up table, determines a number of points by which the user's subscores may be increased in one or more categories. Additional points may, e.g., be added to the user's subscores when the user has successfully completed a task in the game. The service layer 20 also may push seeds via a communication protocol such as WebSocket. As shown in FIGURE 6, the service layer 20 may include components such as an activity tracking component, an achievement rule engine, a caching component, a transactions component, and a query component. Moreover, a database (DB) 30 is provided, in which the user's subscores are stored. The database 30 (which may be implemented on the same server as the service layer 20 or on a separate server) may further hold a social graph showing the user's relation to other users of the system. Moreover, seeds, tasks and potential achievements are stored in the database 30. The user may be informed of his or her global score and/or subscores through the service layer 20.

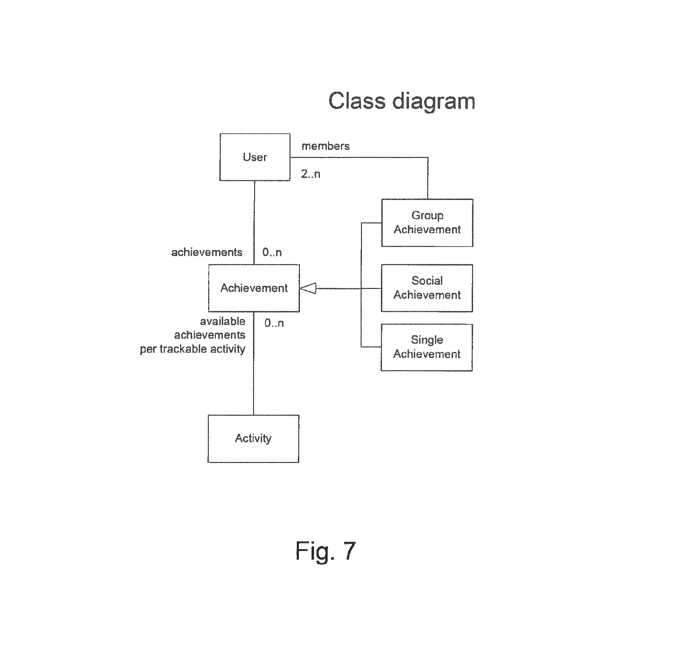

FIGURE 7 shows an exemplary class diagram. As shown in FIGURE 7, achievements have a user connected to them and an activity from which they are generated. The activities are connected to the achievements in FIGURE 7. An achievement can comprise sub-achievements of one or more types. For example, an achievement can be made up of a group achievement, a social achievement, and a single (player) achievement. Having arrived at the achievement, the user may be awarded additional points in a group, a social, and/or a single (player) subcategory of a specific category. Each achievement can generate 0 to n points, adding to the partial subscores in the subcategories.

An implementation of the system of the disclosure uses activities that focus on media usage. For example, actions or achievements are divided into video, audio, music, chat, gaming and social activities, but could also include others like books, e-books, and in general any digital or non-digital media. Whenever a user is active and undertakes an action or completes an achievement, he will gain a certain number of points in at least one of the categories. For example, if a user watches a video with friends, he will be awarded 10 points, where 6 points are assigned to the category named "video" and 4 points to the category named "social." If a user listens to a music track, he gains some points in the "music" category, but also some in the "audio" category, while having a voice chat with another user would gain him points in the "social" and "audio" categories.

In another example, the system categorizes film and TV media into the subcategories of genres such as drama, comedy, Sci-Fi, action, horror, and the like. The provider of such media content would need to provide the metadata about the genre of media content or use existing databases to retrieve such data. Depending on the personal taste of each user, the achievement scores of each user would reflect their personal tastes and would add points to partial subscores in appropriate subcategories. The achievement should be gained by watching single media content and/or gaining special achievements if a full TV show with its 22 episodes had been watched. The same would count for sequel films that would gain a special achievement if all sequels are watched.

An example of the system creates three different categories, namely, a movie persona score, a gamer persona score, and a music persona score. Each game played would award an achievement for the gamer persona subscore; each song listened to or purchased would award an achievement towards the music persona subscore, etc. Each of these three categories may have further subcategories. E.g., the movie persona category may have subcategories tailored to the movie genres. The music persona category can have subcategories defined according to music styles, for example subcategories for rock, pop, hip-hop, classic, folk, etc. The user may be attributed partial subscores in each of the subcategories.

As mentioned above, one achievement or action can add to the user's subscore in more than one category, even in two or more categories. For example, a game based on a TV show can add points to the subscores in the gamer and the movie persona categories.

It is to be understood that many modifications may be provided to the exemplifying embodiments described herein without leaving the scope of the invention. Consequently, the invention may be practiced within the scope of the claims differently from the examples described. Also, the described features and characteristics may be of importance in any combination.

## Claims

1. One or more computer-readable storage media having computer-executable instructions embodied thereon that are adapted to cause a computer to log actions and/or achievements of a user of a computer-implemented environment, by:
detecting one of a plurality of predefined actions or one of a plurality of predefined achievements;
modifying a subscore of the user in at least one of a plurality of categories based on the detected predefined action or predefined achievement; and
updating a global score of the user based on the modified subscores of the user in each of the plurality of categories.

2. The computer-readable storage media of Claim 1, wherein the computer-implemented environment comprises a social network environment or a gaming environment; or wherein the plurality of predefined actions or the plurality of predefined achievements comprises at least one of a gaming activity, a media consumption activity, or a social activity.

3. The computer-readable storage media of Claim 1, wherein at least one of the predefined actions or predefined achievements refers to a user activity outside the computer-implemented environment; or
wherein at least one of the predefined achievements is detected in reaction to completion of a predefined task or each of a plurality of predefined tasks.

4. The computer-readable storage media of Claim 1, wherein at least some of the predefined achievements or actions are associated with hierarchical levels,
wherein, in particular, a first one of said predefined achievements or actions is associated with a first hierarchical level and is available via a first access device of the user, and wherein at least one of the predefined achievements or actions is associated with a level lower than the first hierarchical level and is available via a second access device of the user.

5. The computer-readable storage media of Claim 1, wherein at least two of the predefined actions or predefined achievements are available via different user access devices.

6. The computer-readable storage media of Claim 1, wherein the modifying comprises modifying the subscore using a look-up table associating each of the predefined actions and each of the predefined achievements with at least one of the plurality of categories;
wherein, in particular, the look-up table further associates each of the predefined actions and each of the predefined achievements with a number of points by which the subscore in the at least one of the plurality of categories is to be modified when the predefined action or predefined achievement is detected, respectively.

7. The computer-readable storage media of Claim 1, wherein the computer-executable instructions are further adapted to:
when the global score of the user or one or more of said subscores of the user exceeds a predetermined threshold score, cause the computer to perform at least one of:
enabling the user and/or one or more other users of said computer-implemented environment to take an additional action or to access an additional task not previously available to said user and said one or more other users before, respectively; and
providing at least one of a gift, a deal, and a promotion to the user and/or to one or more other users of said computer-implemented environment.

8. The computer-readable storage media of Claim 1, wherein the modifying the subscore of the user in at least one of the plurality of categories comprises:
modifying a partial subscore of the user in at least one of a plurality of subcategories of the at least one category; and
determining the subscore in the at least one category based on the partial subscores of the user in the plurality of subcategories of the at least one category;
wherein, in particular, the plurality of subcategories comprises at least one of an individual, a social, a team, and a community-based subcategory.

9. The computer-readable storage media of Claim 1, wherein said computer-executable instructions are further adapted to cause the computer to:
provide to the user a visual representation of the global score of the user and the subscore of the user in at least some of the plurality of categories.

10. The computer-readable storage media of Claim 1, wherein updating the global score of the user comprises adding the subscores of the user in each of the plurality of categories.

11. The computer-readable storage media of Claim 1, wherein the plurality of categories comprises at least one of a video category, an audio category, a music category, a chat category, a gaming category, and a social category; or
wherein at least one of the predefined actions comprises at least one or a combination of two or more of:
completing an online purchase;
entering a code;
subscribing to a newsletter;
entering a review of online content;
expressing appreciation of online content by clicking a button;
adding a connection from or to the user within a social network;
watching a specific video, movie or show episode;
watching all of a predefined list of videos;
watching a video together with at least a predefined number of additional users of said computer-implemented environment;
listening to a specific music title; and
contributing to a blog; or
wherein at least one of the predefined achievements comprises at least one or a combination of two or more of:
completing an individual challenge;
completing a group challenge;
completing a community challenge;
completing one or more predefined tasks within a predefined time limit;
having played one or more online games for a predefined amount of time;
having consumed a predefined amount and/or a predefined set of media content items; and
having been registered for an online game or an online social network for at least a predefined period of time.

12. One or more computer-readable storage media having computer-executable instructions embodied thereon that are adapted to cause a computer to:
receive, from a provider of a computer-implemented environment, an indication of at least one of a plurality of categories to be associated with a predefined action or a predefined achievement of a user; and
storing the indication of the at least one category and the predefined user action or predefined user achievement in a look-up table.

13. The computer-readable storage media of Claim 12, wherein the computer-executable instructions are further adapted to cause the computer to receive, from the provider, an indication of a number of points in the at least one category and storing the number of points in the look-up table.

14. A computer system, comprising:
a server adapted to be coupled to at least one device of a user;
a database comprising a look-up table adapted to associate each of a plurality of predefined actions and predefined achievements with at least one of a plurality of categories;
a counter adapted to count a subscore of the user in each of the plurality of categories; and
evaluation logic adapted to:
detect whether the user has taken one of the plurality of predefined actions or has arrived at one of the plurality of predefined achievements via the at least one device; and
when the action or achievement is detected, modify the subscore of the user in at least one of the plurality of categories based on the detected action or achievement using the look-up table.

15. The computer system of Claim 14, further comprising a counter adapted to count a global score of the user, the evaluation logic further being adapted to update the global score of the user based on the modified subscores of the user in each of the plurality of categories, wherein, in particular, the look-up table further comprises a number of points by which the subscore in the at least one category is to be modified when the predefined action or predefined achievement is detected.
